(19) Europäisches Patentamt / European Patent Office / Office européen des brevets

(11) **EP 3 621 041 B1**

(12) **EUROPEAN PATENT SPECIFICATION**

(45) Date of publication and mention
of the grant of the patent:
**27.04.2022 Bulletin 2022/17**

(21) Application number: **19194824.9**

(22) Date of filing: **02.09.2019**

(51) International Patent Classification (IPC):
*G06T 19/20* *(2011.01)*

(52) Cooperative Patent Classification (CPC):
**G06T 19/20;** G06T 2219/2021

(54) **THREE-DIMENSIONAL REPRESENTATION GENERATING SYSTEM**

SYSTEM ZUR ERZEUGUNG DREIDIMENSIONALER DARSTELLUNG

SYSTÈME DE GÉNÉRATION DE REPRÉSENTATIONS TRIDIMENSIONNELLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.09.2018 JP 2018168953**

(43) Date of publication of application:
**11.03.2020 Bulletin 2020/11**

(73) Proprietors:
- **MinD in a Device Co., Ltd.
  Tokyo 156-0055 (JP)**
- **The University of Tokyo
  Bunkyo-ku, Tokyo 113-8654 (JP)**

(72) Inventors:
- **WATANABE, Masataka
  Bunkyo-ku, Tokyo 113-8654 (JP)**
- **NAKAMURA, Tsubasa
  Setagaya-ku Tokyo 156-0055 (JP)**

(74) Representative: **Winter, Brandl - Partnerschaft
mbB
Alois-Steinecker-Straße 22
85354 Freising (DE)**

(56) References cited:
WO-A1-2005/116936     WO-A1-2011/002938
US-A1- 2018 047 208

**Description**

BACKGROUND

Technical Field

The present invention relates to a three-dimensional representation generating system.

Background Art

Using a classifier, a system detects an object in an image obtained by a two or three-dimensional camera (see Japan Patent Application Publication No. 2016-218999, for example).

For the classifier, this system proposes a training method. In the training method, a target environment model is collected as a set of a two-dimensional color image and a three-dimensional depth image (i.e. depth map) from a target environment, a rendering process is performed of the target environment model and a three-dimensional object model of a human or the like, and the rendering process results in an image to be used as training data.

Further, a three-dimensional modeling apparatus generates plural three-dimensional models on the basis of plural pairs of photograph images photographed by a stereo camera, respectively; and generates a more highly accurate three-dimensional model on the basis of the plural three-dimensional models (see Japan Patent Application Publication No. 2012-248221, for example).

Moreover, another system and method for generating a three-dimensional model of an object are for example disclosed in US 2018/047208 A1.

SUMMARY

Technical Problem

If a stereo camera is used in the aforementioned manner of the three-dimensional modeling apparatus, depth information is obtained on the basis of parallax of the stereo camera. In general, in order to derive a distance of each pixel in photograph images obtained by the stereo camera, it is required to determine pixels corresponding to each other in a pair of the photograph images. In addition, the determination of such pixels corresponding to each other requires a lot of computation. Further, in a pair of the photograph images, a proper pair of such pixels corresponding to each other are hardly determined in an area that has substantially uniform pixel values. As mentioned, the aforementioned problems arise in the aforementioned manner for deriving distance information of each pixel from a pair of photograph images obtained by a stereo camera.

Furthermore, in the aforementioned system, an image obtained by a two- or three-dimensional camera is directly used as an input of the classifier, and consequently, explicit shape data of a three-dimensional model or the like can not be obtained, and for correct classification on a pixel-by-pixel basis, it is required to prepare enormous training data and properly train the classifier using the training data.

Solution to Problem

A three-dimensional representation generating system according to an aspect of the present invention includes an error calculating unit; a three-dimensional representation correction amount calculating unit; a three-dimensional representation calculating unit configured to generate a three-dimensional representation corresponding to real photograph images obtained from a photographing subject by predetermined plural cameras; and a three-dimensional representation virtual observation unit. Further, the error calculating unit generates error images between the real photograph images and virtual photograph images obtained by the three-dimensional representation virtual observation unit. The three-dimensional representation correction amount calculating unit generates a correction amount of the three-dimensional representation, the correction amount corresponding to the error images. The three-dimensional representation calculating unit corrects the three-dimensional representation in accordance with the correction amount generated by the three-dimensional representation correction amount calculating unit. The three-dimensional representation virtual observation unit includes a rendering unit configured to perform a rendering process for the three-dimensional representation and thereby generate the virtual photograph images, the virtual photograph images obtained by photographing the three-dimensional representation using virtual cameras corresponding to the cameras. The three-dimensional representation includes plural divisional surfaces arranged in a three-dimensional space. The correction amount of the three-dimensional representation includes correction amounts of positions and directions of the plural divisional surfaces.

These and other objects, features and advantages of the present disclosure will become more apparent upon reading of the following detailed description along with the accompanied drawings.

BRIEF DESCRIPTION OF THE DRAWINGS

Fig. 1 shows a block diagram that indicates a configuration of a three-dimensional representation generating system in Embodiment 1 of the present invention;

Figs. 2 and 3 show diagrams that explain plural divisional surfaces included by a three-dimensional representation in Embodiment 1;

Fig. 4 shows a diagram that explains a rendering process for the divisional surfaces shown in Figs. 2 and 3;

Fig. 5 shows a flowchart that explains a behavior of the three-dimensional representation generating system in Embodiment 1;

Fig. 6 shows a diagram that explains training of a deep neural network in a three-dimensional representation correction amount calculating unit 12 in Embodiment 1;

Fig. 7 shows a diagram that explains dividing an error image and divisional surfaces in Embodiment 2; and

Fig. 8 shows a block diagram that indicates a configuration of a three-dimensional representation generating system in Embodiment 4 of the present invention.

DETAILED DESCRIPTION

Hereinafter, embodiments according to aspects of the present invention will be explained with reference to drawings.

Embodiment 1.

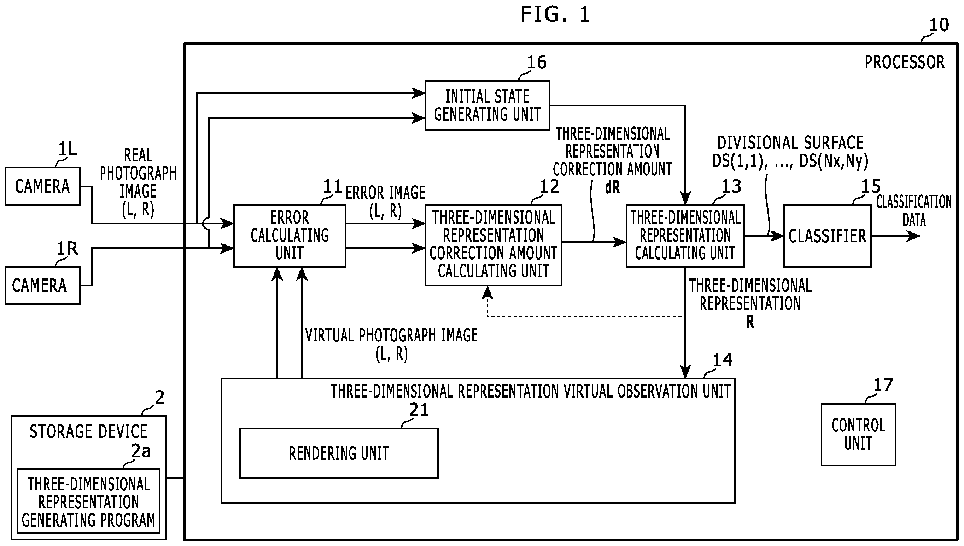

Fig. 1 shows a block diagram that indicates a configuration of a three-dimensional representation generating system in Embodiment 1 of the present invention. A three-dimensional representation generating system shown in Fig. 1 includes plural cameras 1L and 1R, a storage device 2, and a processor 10. The plural cameras 1L and 1R are devices that photograph a common photographing subject (scene). The storage device 2 is a nonvolatile storage device such as flash memory or hard disk drive and stores data, a program and/or the like. The processor 10 includes a computer that includes a CPU (Central Processing Unit), a ROM (Read Only Memory), a RAM (Random Access Memory) and the like, and loads a program from the ROM, the storage device 2 or the like to the RAM and executes the program using the CPU and thereby acts as processing units.

In this embodiment, the plural cameras 1L and 1R are a stereo camera, but not limited to it, and three or more cameras may be used instead of the cameras 1L and 1R. Further, in this embodiment, real photograph images obtained by the cameras 1L and 1R are provided to the processor 10 immediately after the photographing. Alternatively, real photograph images obtained by the cameras 1L and 1R may be indirectly provided from a recording medium or another device to the processor 10.

In this embodiment, the storage device 2 stores a three-dimensional representation generating program 2a. For example, this three-dimensional representation generating program 2a is recorded in a portable non-transitory computer readable recording medium, and is read from the recording medium and installed into the storage device 2. Further, the processor 10 reads and executes the three-dimensional representation generating program 2a and thereby acts as an error calculating unit 11, a three-dimensional representation correction amount calculating unit 12, a three-dimensional representation calculating unit 13, a three-dimensional representation virtual observation unit 14, a classifier 15, an initial state generating unit 16, and a control unit 17.

The error calculating unit 11 generates error images between the real photograph images obtained from a photographing subject by the predetermined plural cameras 1L and 1R and virtual photograph images obtained by the three-dimensional representation virtual observation unit 14.

Here, the real photograph image and the virtual photograph image have same sizes with same resolutions in same formats (e.g. RGB), and the error image is obtained by calculating a difference between the real photograph image and the virtual photograph image on a pixel-by-pixel basis.

The three-dimensional representation correction amount calculating unit 12 generates a correction amount $dR$ of a three-dimensional representation such that the correction amount $dR$ corresponds to the error images of a set of the real photograph images (here, a pair of a real photograph image by the camera 1L and a real photograph image by the camera 1R).

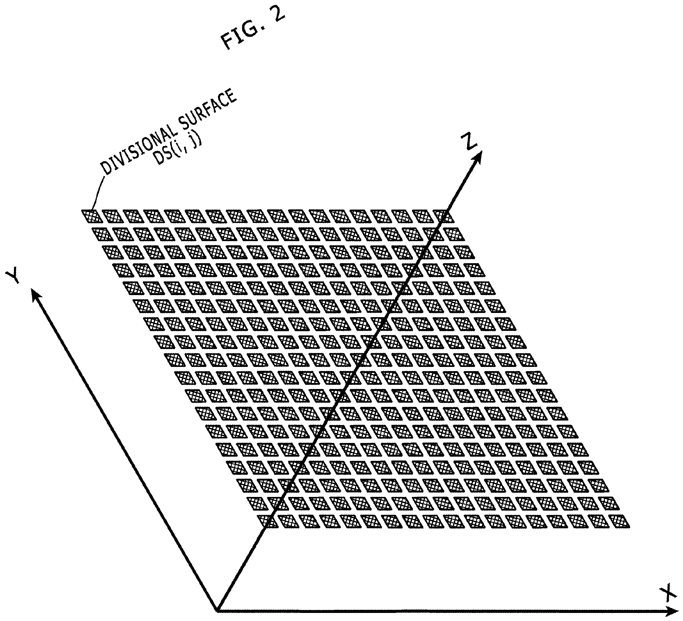

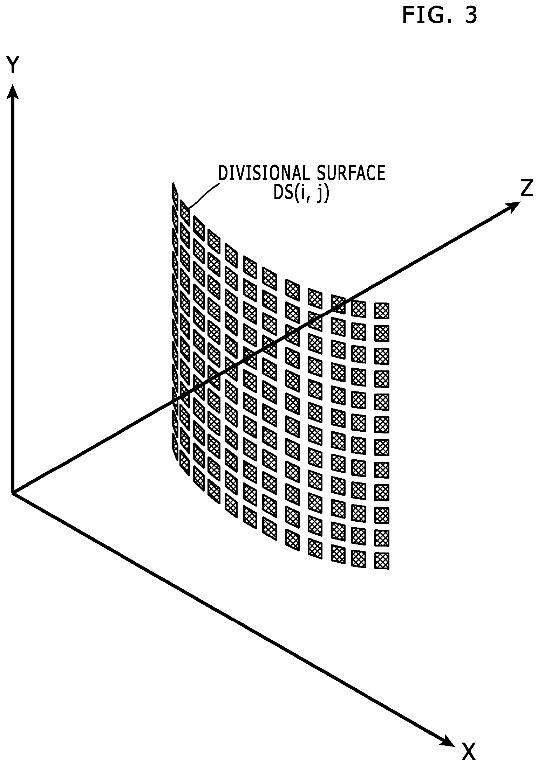

Figs. 2 and 3 show diagrams that explain plural divisional surfaces included by a three-dimensional representation in Embodiment 1. Here, a three-dimensional representation R expresses a three-dimensional shape of an object in the real photograph images, and as shown in Fig. 2, includes plural divisional surfaces DS(i, j) (i = 1, ..., Nx; j = 1, ... Ny) arranged in a three-dimensional space. Here, Nx is the number (constant number) of the divisional surfaces DS(i, j) in an X direction (a primary scanning direction of the real photograph images, e.g. horizontal direction), and Ny is the number (constant number) of the divisional surfaces DS(i, j) in a Y direction (a secondary scanning direction of the real photograph images, e.g. vertical direction). The total number of the divisional surfaces DS(i, j) is less than the number of pixels in the error image (i.e. the number of pixels in the real photograph image).

Here, the divisional surface DS(i, j) is a flat plane, and has a predetermined size and a predetermined shape (here, rectangular shape). The divisional surface DS(i, j) may be a three-dimensionally curved surface (e.g. spherical surface), and a curvature of the curved surface may be added as a property of the divisional surface DS(i, j) so as to be correctable. Further, regarding the plural divisional surfaces DS(i, j), a position of each divisional surface DS(i, j) almost agrees with a position of a partial area in the error image, and the partial area affects the correction of this divisional surface DS(i, j).

Further, in this embodiment, the three-dimensional representation R may further include one or plural light sources LS(i) (i = 1, ..., NL), and the correction amount dR of the three-dimensional representation R may include a correction amount of a light emitting characteristic of the light source(s). Here, NL is an upperlimit number (contact number) of the light source(s) in the three-dimensional representation R.

Therefore, the three-dimensional representation R is expressed as the following formula based on property values of the divisional surfaces DS(i, j) and the light source(s) LS(i).

$$R = (S(1, 1), ..., S(Nx, Ny), L(1), ..., L(NL))$$

Here, S(i, j) is a property value set of a divisional surfaces DS(i, j), and indicates geometrical information (position, direction and the like) and an optical characteristic of a divisional surface DS(i, j). L(i) is a property value set of a light source LS (i), and indicates geometrical information (position and the like) and an optical characteristic of a light source LS(i).

For example, a property value set S(i, j) of a divisional surface DS(i, j) may be expressed as the following formula.

$$S(i, j) = (X, Y, Z, THETA, PHI, Ref(1), ..., Ref(Nw), Tr(1), ..., Tr(Nw))$$

Here, (X, Y, Z) are XYZ coordinate values of a representative point (e.g. center point) of a divisional surface DS(i, j), and (THETA, PHI) are an azimuth angle and an elevation angle of a normal line at the representative point of the divisional surface DS(i, j) and thereby indicates a direction of the divisional surface DS(i, j). Further, Ref(1), ..., Ref(Nw) are reflection factors of (Nw) wavelength ranges into which a specific wavelength range (here, visible wavelength range) is divided. Furthermore, Tr(1), ..., Tr(Nw) are transmission factors of (Nw) wavelength ranges into which a specific wavelength range (here, visible wavelength range) is divided.

Usually, a reflection factor and a transmission factor of an object surface are different depending on a wavelength of incident light, and therefore, such reflection factors and transmission factors of plural wavelength ranges into which a visible wavelength range is divided are set as properties of each divisional surface DS(i, j).

Instead of the reflection factor Ref(i), a specular reflection factor Ref_S(i) and a diffuse reflection factor Ref_D(i) may be used. Further, if light of all wavelengths in the specific wavelength range is not transmitted through an object as the photographing subject, the aforementioned transmission factors Tr(1), ..., Tr(Nw) may be omitted.

Further, the light source LS(i) may be expressed as the following formula.

$$L(i) = (X, Y, Z, Em(1), ..., Em(Nw), type, THETA, PHI)$$

Here, (X, Y, Z) are XYZ coordinate values of a representative point (e.g. center point) of a light source LS(i), and Em(1), ..., Em(Nw) are emitting light amounts of (Nw) wavelength ranges into which a specific wavelength range (here, visible wavelength range) is divided. Further, type is a light source type of the light source LS(i), such as point light source, surface light source, directional light source or ambient light; and (THETA, PHI) are an azimuth angle and an elevation angle that indicate a direction of light emitted from the light source LS(i) of a specific type such as surface light source or directional light source.

If the number of the light sources LS(i) is less than the upperlimit number, then in a property value set of a non-existent light source in data of the light sources LS(i), the emitting light amount is caused to get close to about zero by the correction amount. Further, here, the property value set L(i) includes the property "type" that indicates a type of a light source LS(i). Alternatively, different property value sets may be defined corresponding to light source types, respectively, and may be included in the three-dimensional representation R. Furthermore, if a type of a real light source is constant in a real photographing environment of the cameras 1L and 1R, then a value of the light source type "type" in the three-dimensional representation R may be limited to the actual type of the real light source.

Furthermore, the correction amount dR of the three-dimensional representation R includes a correction amount of each property value in the three-dimensional representation R, for example, correction values of positions and directions of the divisional surfaces DS(i, j). Here the position and the direction of the divisional surface DS(i, j) are the aforementioned (X, Y, Z) and (THETA, PHI).

In this embodiment, positions of a divisional surface DS(i, j) in the X and Y directions (here in horizontal and vertical directions) are fixed, and a position in the Z direction (i.e. in the depth direction) and a direction (THETA, PHI) of a divisional surface DS(i, j) are variable and can be changed with the aforementioned correction amount dR.

It should be noted that a position of an object at an infinite point in the depth direction (Z direction) such as sky is changed to get closer to an upperlimit value allowed in data expression.

Consequently, as shown in Fig. 3 for example, a position and a direction of each divisional surface DS(i, j) are corrected and thereby a three-dimensionally curved surface is expressed with the plural divisional surfaces DS(1, 1), ..., DS(Nx, Ny) in the three-dimensional representation R.

Further, in this embodiment, as mentioned, a divisional surface DS(i, j) may have not only a position and a direction but a reflection factor Ref(i) and/or a transmission factor Tr(i) of light (here, both), and a correction amount dR may include one or two correction amounts of the reflection factor Ref(i) and/or the transmission factor Tr(i).

The three-dimensional representation correction amount calculating unit 12 generates the correction value dR corresponding to the error images using a deep neural network (hereinafter, also called "DNN"), and the DNN is a convolutional neural network as a known technique. If input of the DNN is normalized if required and output of the DNN is normalized in a range from 0 to 1, then for each property value, the output value is converted to a corresponding value in a range from a predetermined lowerlimit value (negative value) to a predetermined upperlimit value (positive value).

Input of the three-dimensional representation correction amount calculating unit 12 may include not only the error images but the three-dimensional representation R before the correction.

Returning to Fig. 1, the three-dimensional representation calculating unit 13 generates a three-dimensional representation R corresponding to the aforementioned real photograph images. Here, the three-dimensional representation calculating unit 13 generates a three-dimensional representation R in accordance with the correction amount dR generated by the three-dimensional representation correction amount calculating unit 12. Specifically, for a set of the real photograph images, the three-dimensional representation calculating unit 13 changes a current three-dimensional representation R (i.e. in an initial state or a state after the previous correction) by the correction amount dR, and thereby generates a three-dimensional representation R corresponding to the aforementioned real photograph images. More specifically, each property value is increased or decreased by an amount specified by the correction amount dR.

The three-dimensional representation virtual observation unit 14 observes the three-dimensional representation R using virtual cameras and the like as well as the observation of the photographing subject using the real cameras 1L and 1R and the like, and thereby generates virtual photograph images and the like.

In this embodiment, the three-dimensional representation virtual observation unit 14 includes a rendering unit 21. The rendering unit 21 performs a rendering process for the three-dimensional representation R using a known ray tracing method or the like and thereby generates the virtual photograph images such that the virtual photograph images are obtained by photographing the three-dimensional representation R using plural virtual cameras corresponding to the plural cameras 1L and 1R.

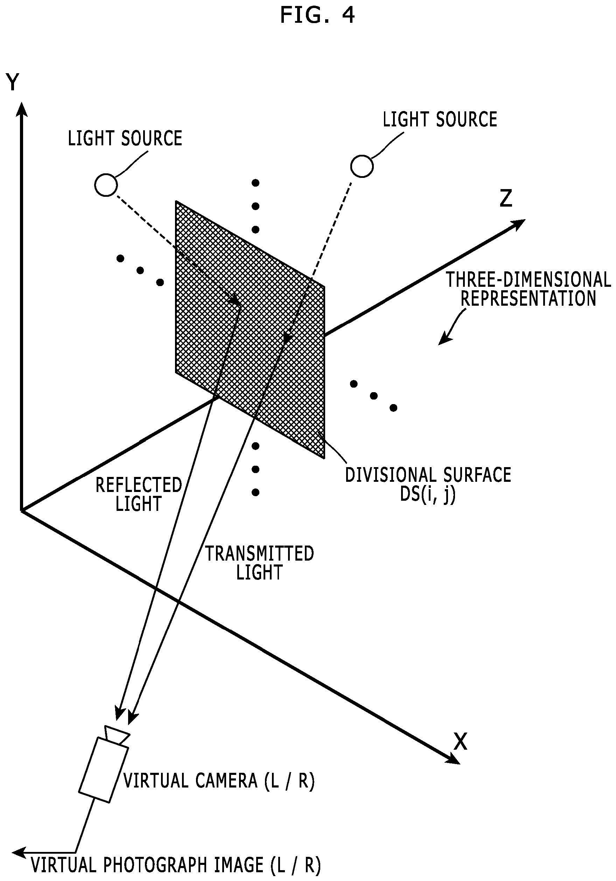

Fig. 4 shows a diagram that explains a rendering process for the divisional surfaces shown in Figs. 2 and 3. Here, the virtual camera is obtained by simulating a known optical characteristic of an imaging sensor, an optical system such as lens configuration and the like (i.e. a size of the imaging sensor, a pixel quantity of the imaging sensor, a focal length of the lens configuration, angle of view, transparent light amount (i.e. f-number) and the like) of the corresponding camera 1L or 1R; and the rendering unit 21 (a) determines an incident light amount of incident light to each pixel position in a (virtual) imaging sensor in the virtual camera with taking the optical characteristic into account using a ray tracing method or the like as shown in Fig. 4 where (a1) the incident light is reflection light or transmitted light from one or more divisional surfaces DS(i, j) and (a2) the reflection light or the transmitted light is based on light emitted from a light source LS(i), (b) determines a pixel value corresponding to the incident light amount, and (c) generates a virtual photograph image based on the determined pixel values of all pixels in the (virtual) camera.

Returning to Fig. 1, the classifier 15 classifies an object in the three-dimensional representation R on the basis of the aforementioned plural divisional surfaces DS(1, 1), ..., DS(Nx, Ny) in the three-dimensional representation R finalized for a set of the real photograph images. For example, the classifier 15 classifies the object using a DNN such as convolutional neural network. The classifier 15 outputs classification data as a classifying result. For example, the classification data is classification codes respectively associated with the divisional surfaces DS(i, j). The classification code is numerical data that indicates an object type such as human, automobile, building, road or sky, for example; and a unique classification code is assigned to each object type in advance.

The initial state generating unit 16 generates an initial state (initial vector) of the three-dimensional representation R. For example, the initial state generating unit 16 generates an initial state (initial vector) of the three-dimensional representation R from the photograph images using a DNN such as convolutional neural network. If a predetermined constant vector is set as the initial state of the three-dimensional representation R, the initial state generating unit 16 may be omitted.

The control unit 17 acquires the real photograph images (image data) from the cameras 1L and 1R or the like, and controls data processing in the processor 10 such as starting the generation of the three-dimensional representation and determining termination of iterative correction of the three-dimensional representation.

In this embodiment, the processor 10 as only one processor acts as the aforementioned processing units 11 to 17. Alternatively, plural processors capable of communicating with each other act as the aforementioned processing units 11 to 17 as distributed processing. Further, the processor 10 is not limited to a computer that performs a software process but may use a specific purpose hardware such as accelerator.

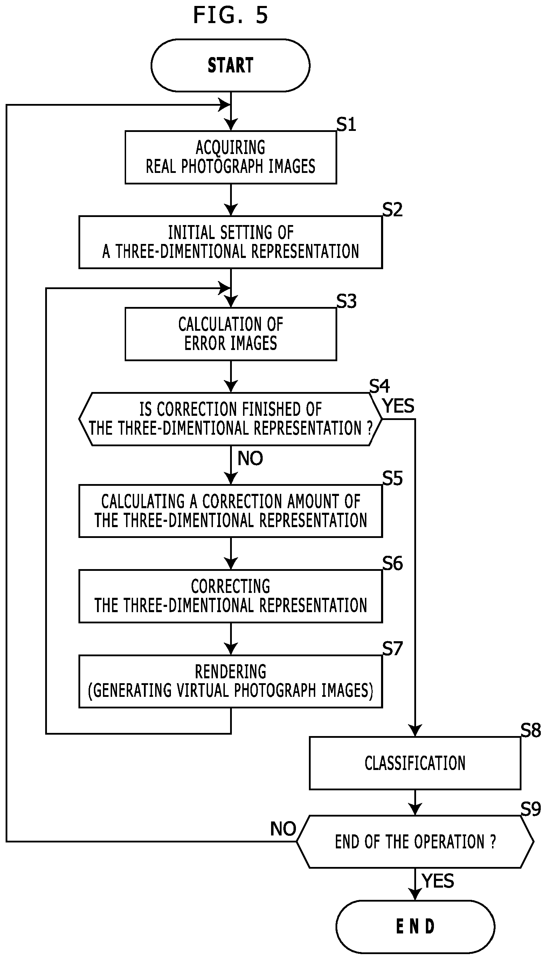

The following part explains a behavior of the three-dimensional representation generating system in Embodiment 1. Fig. 5 shows a flowchart that explains a behavior of the three-dimensional representation generating system in Embodiment 1.

The control unit 17 starts an operation in accordance with a user operation to a user interface (not shown) connected to the processor 10, acquires real photograph images from the cameras 1L and 1R (in Step S1), and performs initial setting of a three-dimensional representation R and virtual photograph images (in Step S2). In this process, arbitrary three-dimensional representation may be set as an initial state of the three-dimensional representation R, or an initial state of the three-dimensional representation R may be generated from the real photograph images by the initial state generating unit 16. After determining the initial state of the three-dimensional representation R, initial states of the virtual photograph images are obtained by performing a rendering process for the initial state of the three-dimensional representation R using the rendering unit 21.

Subsequently, the error calculating unit 11 generates each error image between a real photograph image of each camera 1i (i = L, R) and a virtual photograph image of the corresponding virtual camera (in Step S3). Consequently, plural error images are generated. Here, the error image is generated of each color coordinate plane corresponding to a format (i.e. color space) of the real photograph images and the virtual photograph images. For example, if the format of the real photograph images and the virtual photograph images is RGB, an error image of R plane, an error image of G plane and an error image of B plane are generated for each pair of the camera 1i and the virtual camera.

Upon generating the error images, the control unit 17 determines whether the error images satisfy a predetermined conversion condition or not (in Step S4); and if the error images satisfy the predetermined conversion condition, then the control unit 17 terminates the iterative correction of the three-dimensional representation R and otherwise if not, the control unit 17 causes to perform the correction of the three-dimensional representation R as follows. For example, the conversion condition is that a total value or an average value of second powers (or absolute values) of pixel values in all error images gets less than a predetermined threshold value. Thus, if the virtual photograph images sufficiently resemble the real photograph images, then the iterative correction of the three-dimensional representation R is terminated.

If the generated error images do not satisfy the aforementioned conversion condition, then the three-dimensional representation correction amount calculating unit 12 calculates a correction amount dR of the three-dimensional representation R from the generated plural error images as input (in Step S5). In this process, the current three-dimensional representation R (i.e. that before the correction at this time) may be also used as input of the three-dimensional representation correction amount calculating unit 12.

Upon obtaining the correction amount dR of the three-dimensional representation R, the three-dimensional representation calculating unit 13 changes (a) property values in a property value set S(i, j) of each divisional surface DS(i, j) and (b) property values in a property value set L(i) of each light source LS(i) by respective correction amounts specified by the correction amount dR, and thereby corrects the three-dimensional representation R (in Step S6).

Subsequently, every time that the correction of the three-dimensional representation R is performed, the rendering unit 21 in the three-dimensional representation virtual observation unit 14 performs a rendering process of the divisional surfaces DS (1, 1), ..., DS(Nx, Ny) on the basis of the corrected three-dimensional representation R and thereby generates virtual photograph images of plural virtual cameras corresponding to the real plural cameras 1L and 1R (in Step S7).

Afterward, returning to Step S3, the error calculating unit 11 generates error images between the virtual photograph images newly generated from the corrected three-dimensional representation R and the real photograph images that have been already obtained. Subsequently, as mentioned, until the error images satisfy the aforementioned conversion condition, the correction of the three-dimensional representation R is iteratively performed (in Steps S5 to S7).

Contrarily, if the error images satisfy the aforementioned conversion condition, the control unit 17 finalizes the three-dimensional representation R so as to identify the current three-dimensional representation R as the three-dimensional representation R corresponding to the obtained real photograph images, and the classifier 15 receives the divisional surfaces DS(1, 1), ..., DS(Nx, Ny) of the finalized three-dimensional representation R as input and classifies an object expressed by the divisional surfaces DS(1, 1), ..., DS(Nx, Ny) (in Step S8). For example, the classifier 15 associates classification data that indicates an object class (object type) with each divisional surface DS(i, j), and for example, outputs the classification data and the divisional surfaces DS(i, j) to an external device.

Afterward, the control unit 17 determines whether the operation should be terminated in accordance with a user operation to a user interface (not shown) or not (in Step S9); and if it is determined that the operation should be terminated, then the control unit 17 terminates the generation of the three-dimensional representation R, and otherwise if it is determined that the operation should not be terminated, returning to Step S1, the control unit 17 acquires a next set of real photograph images and causes to perform processes in and after Step S2 as well for the next set of the real photograph images and thereby generates a three-dimensional representation R corresponding to the next real photograph images.

As mentioned, until the error images for one set of the real photograph images are converged with satisfying a predetermined condition, the error calculating unit 11, the three-dimensional representation correction amount calculating unit 12, the three-dimensional representation calculating unit 13, and the three-dimensional representation virtual observation unit 14 iteratively perform the generation of the error images, the generation of the correction amount, the correction of the three-dimensional representation, and the generation of the virtual photograph images from the three-dimensional representation respectively.

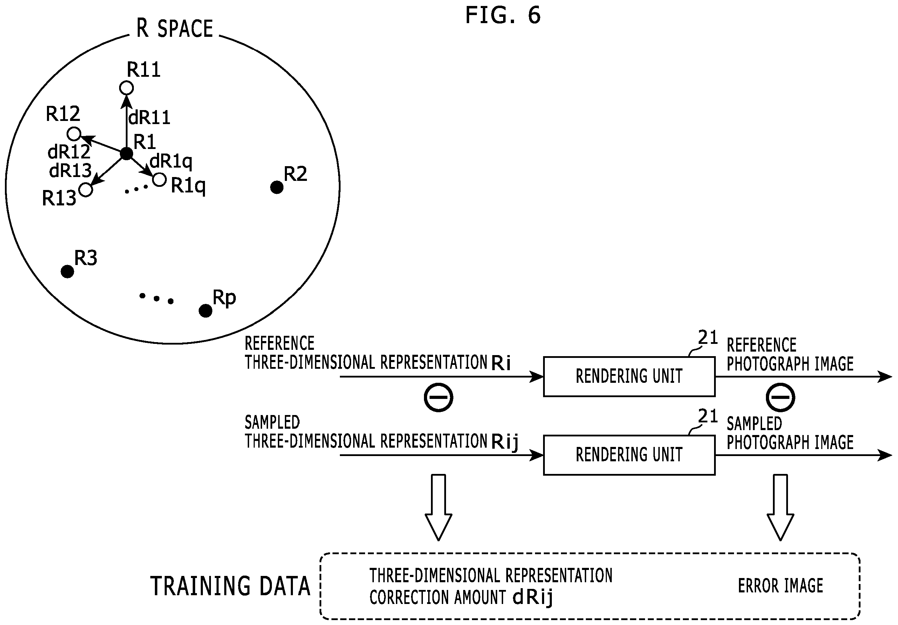

Here explained is training of the DNN in the three-dimensional representation correction amount calculating unit 12. Fig. 6 shows a diagram that explains the training of the DNN in the three-dimensional representation correction amount calculating unit 12 in Embodiment 1.

The DNN in the three-dimensional representation correction amount calculating unit 12 generates a correction amount dR corresponding to the error images. The training of this DNN is automatically performed as follows, for example.

Firstly, arbitrary plural reference three-dimensional representations Ri (i = 1, ..., p) are generated so as to be distributed in a space of the three-dimensional representation R, and plural sampled three-dimensional representations Rij are generated by adding plural correction amounts dRij to the reference three-dimensional representation Ri. The correction amount dRij specifies one or plural correction amounts of one or plural (a part or all of) property values, and one or plural correction amounts of remaining property value(s) are set as zero.

Subsequently, for each reference three-dimensional representation Ri, reference photograph images are generated by performing a rendering process for the reference three-dimensional representations Ri; and sampled photograph images are generated by performing a rendering process for the sampled three-dimensional representation Rij (i.e. the corrected three-dimensional representation of which the correction amount is known) corresponding to the reference three-dimensional representation Ri.

Subsequently, error images are generated between the reference photograph images and the sampled photograph images, and a set of training data is obtained as a pair of the error images and the aforementioned correction amount dRij. In this manner, many sets of training data are generated. On the basis of the training data generated as mentioned, the DNN is trained in accordance with an error backpropagation method, for example.

It should be noted that this process of the training may be performed by the processor 10, or may be performed by another device and thereafter a training result may be applied to this DNN.

Further, the DNN in the initial state generating unit 16 is also trained, for example, using pairs of the three-dimensional representations (e.g. the reference three-dimensional representations Ri and/or the sampled three-dimensional representations Rij) and the virtual photograph images as training data.

Here explained is training of the DNN in the classifier 15.

In the training of the DNN in the classifier 15, a pair of (a) the divisional surfaces DS(1, 1), ..., DS(Nx, Ny) and (b) the classification data of the divisional surfaces DS(1, 1), ..., DS(Nx, Ny) (i.e. classes associated with the divisional surfaces) is used as a set of training data. Therefore, an arbitrary set of divisional surfaces DS(1, 1), ..., DS(Nx, Ny) is generated, and classification data corresponding to the generated divisional surfaces DS(1, 1), ..., DS(Nx, Ny) is generated in accordance with manual input for example, and thereby the aforementioned training data is generated, and the DNN in the classifier 15 is trained using this training data.

It should be noted that this process of the training may be performed by the processor 10, or may be performed by another device and thereafter a training result may be applied to this DNN.

As mentioned, in Embodiment 1, the error calculating unit 11 generates error images between the real photograph images obtained from a photographing subject by the predetermined plural cameras 1L and 1R and virtual photograph images obtained by the three-dimensional representation virtual observation unit 14. The three-dimensional representation correction amount calculating unit 12 generates a correction amount dR of the three-dimensional representation R such that the correction amount dR corresponds to the error images. The three-dimensional representation calculating unit 13 generates a three-dimensional representation R in accordance with the correction amount dR generated by the three-dimensional representation correction amount calculating unit 12. The three-dimensional representation virtual observation unit 14 includes the rendering unit 21. The rendering unit 21 performs a rendering process for the three-dimensional representation R and thereby generates the virtual photograph images such that the virtual photograph images are obtained by photographing the three-dimensional representation R using virtual cameras corresponding to the cameras 1L and 1R. Here, the three-dimensional representation R includes plural divisional surfaces DS(1, 1), ..., DS(Nx, Ny) arranged in a three-dimensional space; and the correction amount dR of the three-dimensional representation R includes correction amounts of positions and directions of the plural divisional surfaces DS(1, 1), ..., DS(Nx, Ny) .

Consequently, a three-dimensional representation expresses a three-dimensional object that exists in an angle of view of photograph images, and such a three-dimensional representation is generated with relatively small computation from the photograph images.

Further, the three-dimensional representation correction amount calculating unit 12 uses the DNN, and consequently, it is expected that a distance of a pixel is determined more accurately than a distance calculated by an ordinary stereo camera because it is estimated from its circumference even if the pixel is located in an area having substantially uniform pixel values. Furthermore, the virtual photograph images are generated from the three-dimensional representation R by the three-dimensional representation virtual observation unit 14, and are feedbacked to the error images, and consequently, the three-dimensional representation R is generated with fidelity to the real photograph images, compared to a case that a three-dimensional model is generated in such a feedforward manner of the aforementioned three-dimensional modeling apparatus.

Embodiment 2.

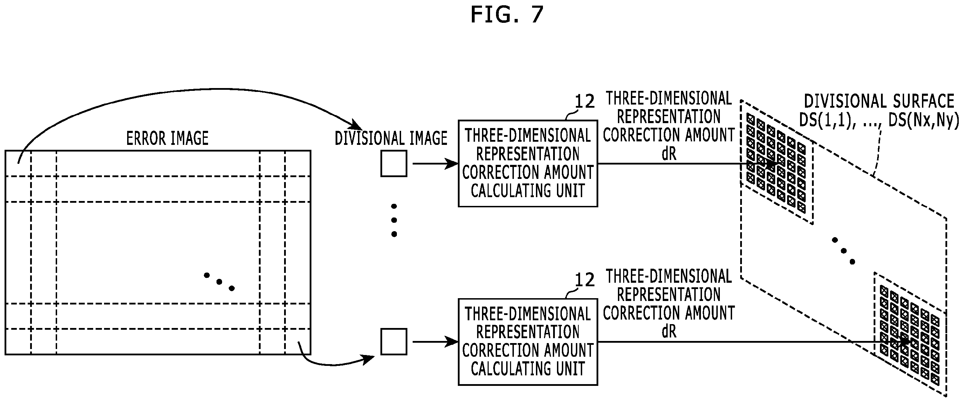

Fig. 7 shows a diagram that explains dividing an error image and divisional surfaces in Embodiment 2. In the three-dimensional representation generating system in Embodiment 2, the three-dimensional representation correction amount calculating unit 12 divides the error images and the divisional surfaces as shown in Fig. 7, and generates a correction amount dR of a partial three-dimensional representation (i.e. a part of the three-dimensional representation) from each divisional error images such that the partial three-dimensional representation includes a part of the divisional surfaces DS(i, j) and a part of the light source(s) L(i). Here, in the X-Y plane, the divisional surfaces DS(i, j) are divided into parts of divisional surfaces, and each of the parts includes a same predetermined number of divisional surfaces.

Specifically, in Embodiment 2, the three-dimensional representation correction amount calculating unit 12 divides each of the aforementioned error images into plural divisional images, selects one of the plural divisional images in turn, and generates a partial correction amount of the three-dimensional representation such that the partial correction amount corresponds to the selected divisional image. Further, in Embodiment 2, the three-dimensional representation calculating unit 13 corrects the three-dimensional representation R in accordance with the correction amounts dR (here, correction amounts of a divisional part of the divisional surfaces and the light source(s)) of the partial three-dimensional representations respectively corresponding to the plural divisional images.

Regarding the light source(s) LS(i), the light source LS(i) may be corrected on the basis of a correction amount of a property value set L(i) of the light source LS(i) when each partial three-dimensional representation is corrected; or the light source(s) LS(i) may be corrected at once using (a) an average value of correction amounts of the property value set L(i) of the light source LS(i) in correction amounts of all the partial three-dimensional representations (i.e. an average value of the correction amounts that are substantially non-zero) or (b) a correction amount of which an absolute value is largest in correction amounts of all the partial three-dimensional representations.

Other parts of the configuration and behaviors of the system in Embodiment 2 are identical or similar to those in any of Embodiment 1, and therefore not explained here.

As mentioned, in Embodiment 2, the divisional image that is smaller than the error image between the real photograph image and the virtual photograph image is inputted to the three-dimensional representation correction amount calculating unit 12, and correction amounts of divisional surfaces and a light source are generated in a part corresponding to the divisional image by the three-dimensional representation correction amount calculating unit 12. Consequently, the three-dimensional representation correction amount calculating unit 12 can use a small scale DNN. Therefore, only small computation is required to the three-dimensional representation correction amount calculating unit 12 and the training of the DNN is performed with small computation.

In Embodiment 2, for the training of the DNN used in the three-dimensional representation correction amount calculating unit 12, training data in Embodiment 2 is generated as a pair of the divisional image and the correction amount dR of the divisional surfaces DS(i, j) and the light source(s) LS(i) corresponding to the divisional image, from the training data of Embodiment 1 (a pair of the error images and the correction value), and the training of the DNN is performed with this training data.

Embodiment 3.

In the three-dimensional representation generating system in Embodiment 3, the three-dimensional representation R is generated in the aforementioned manner for each frame of the real photograph images in continuous images (i.e. a video) photographed along a time series by the cameras 1L and 1R. Therefore, the three-dimensional representation R changes over time along real photograph images of continuous frames.

Specifically, in Embodiment 3, the error calculating unit 11, the three-dimensional representation correction amount calculating unit 12, the three-dimensional representation calculating unit 13, and the three-dimensional representation virtual observation unit 14 perform the generation of the error image, the generation of the correction amount dR, the correction of the three-dimensional representation R, and the generation of the virtual photograph images from the three-dimensional representation R respectively, for real photograph images of each frame in a series of real photograph images in a video.

Therefore, in Embodiment 3, along a time series, the three-dimensional representation changes with videos. In this process, the classifier 15 may perform object classification based on the divisional surfaces DS of each frame. In this case, the classification of an object that appears and/or disappears in a video is performed along the video.

In this process, an initial state of the three-dimensional representation R at the first frame is generated by the initial state generating unit 16, and an initial state of the three-dimensional representation R at each subsequent frame is set to be equal to (a) the finalized three-dimensional representation R at the previous frame or (b) a three-dimensional representation estimated (e.g. linearly) from the three-dimensional representations R (three-dimensional representations finalized at respective frames) at plural past frames (e.g. two latest frames) from the current frame.

Other parts of the configuration and behaviors of the system in Embodiment 3 are identical or similar to those in Embodiment 1 or 2, and therefore not explained here.

As mentioned, in Embodiment 3, the three-dimensional representation is smoothly changed from a frame to a frame with plural real photograph images along a time series of a video.

Embodiment 4.

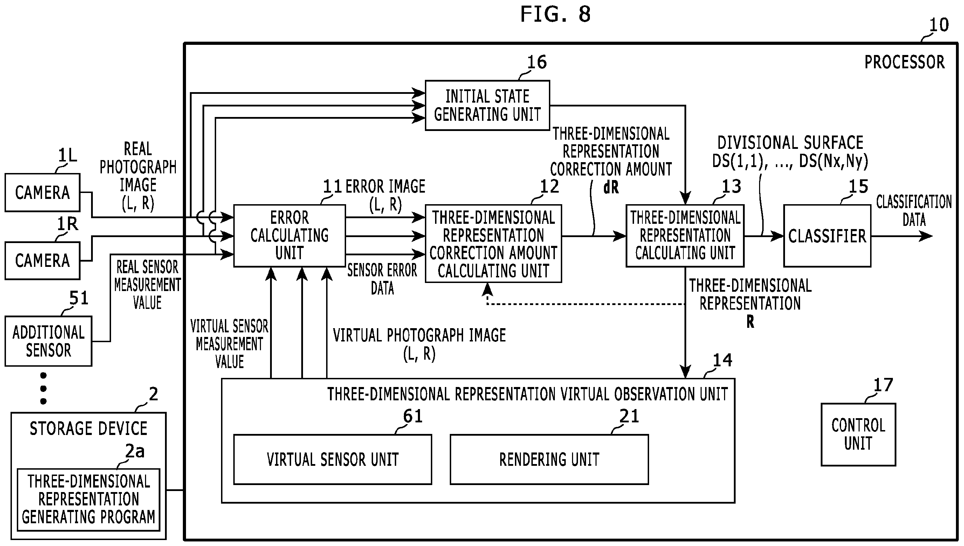

Fig. 8 shows a block diagram that indicates a configuration of a three-dimensional representation generating system in Embodiment 4 of the present invention. In the three-dimensional representation generating system in Embodiment 4, (a) a real sensor measurement value is obtained by an additional sensor 51 other than the plural cameras 1L and 1R, (b) a virtual sensor measurement value is obtained by a virtual sensor unit 61 in the three-dimensional representation virtual observation unit 14, (c) sensor error data between the real sensor measurement value and the virtual sensor measurement value is calculated, and (d) the correction value of the three-dimensional representation is determined with taking the sensor error data into account.

Specifically, in Embodiment 4, the error calculating unit 11 generates not only the error images but sensor error data between a real sensor measurement value obtained by a predetermined additional sensor 51 that observes an environment including the photographing subject and a virtual sensor measurement value obtained by the three-dimensional representation virtual observation unit 14; and in Embodiment 4, the three-dimensional representation correction amount calculating unit 12 generates a correction amount dR of the three-dimensional representation such that the correction amount dR corresponds to both the error images and the sensor error data.

Further, in Embodiment 4, the three-dimensional representation virtual observation unit 14 includes the virtual sensor unit 61, and the virtual sensor unit 61 is obtained by simulating the additional sensor 51 such that the virtual sensor unit has a same measurement characteristic as a measurement characteristic of the additional sensor 51; and the three-dimensional representation virtual observation unit 14 generates the virtual sensor measurement value such that the virtual sensor measurement value is obtained by observing the three-dimensional representation using the virtual sensor unit 61.

In this embodiment, the additional sensor 51 includes a RADAR sensor or a LiDAR (Light Detection and Ranging) sensor. In this case, the additional sensor 51 generates a real depth map image. In this case, the virtual sensor unit 61 virtually observes the three-dimensional representation R (the divisional surfaces DS(1, 1), ..., DS(Nx, Ny)) using the same function as a function of the RADAR sensor or the LiDAR sensor, and thereby generates a virtual depth map image. In this case, the sensor error data is an error image between the real depth map image and the virtual depth map image.

In Embodiment 4, if an initial state of the three-dimensional representation R is generated by the initial state generating unit 16, then the real sensor measurement values is also used as the input of the initial state generating unit 16 together with the real photograph images. Further, in Embodiment 4, regarding the training of the DNN used in the three-dimensional representation correction amount calculating unit 12, the virtual sensor measurement value generated by the virtual sensor unit 61 is added to the input in the training data in Embodiment 1 (i.e. a pair of the error images and the correction amount), and the DNN is trained with the training data.

Other parts of the configuration and behaviors of the system in Embodiment 4 are identical or similar to those in any of Embodiments 1 to 3, and therefore not explained here.

As mentioned, in Embodiment 4, a phenomenon that can be measured by the additional sensor 51 is included into the three-dimensional representation. Further, if a RADAR sensor or a LiDAR sensor is added as the additional sensor 51, then a position in the depth direction (Z direction) of the divisional surface DS(i, j) is more accurately determined because (a) parallax information by the plural cameras 1L and 1R and (b) the depth map by the RADAR sensor or the LiDAR sensor are used as the input of the three-dimensional representation correction amount calculating unit 12.

It should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

For example, in each of the aforementioned embodiments, the divisional surfaces DS(1, 1), ..., DS(Nx, Ny) of the three-dimensional representation R are expressed with the aforementioned property value set S(1, 1), ..., S(Nx, Ny), respectively. Alternatively, other data expression may be applied. For example, the plural divisional surfaces may be three-dimensionally arranged fixedly at a predetermined interval (i.e. XYZ coordinate values of the divisional surfaces are fixed), an on/off (existence/non-existence) status of each divisional surface may be added as a property value, and this property value may be controlled with the correction amount dR.

Further, in any of the aforementioned embodiments, the shape and the size of the divisional surface DS(i, j) are not limited to those shown in the figures, and it may be configured such that the shape and the size of the divisional surface DS(i, j) are set as changeable property values. Furthermore, in any of the aforementioned embodiments, the divisional surfaces DS(i, j) may be deformed and converted to polygons such that the polygons adjacent to each other connect to each other. Furthermore, in any of the aforementioned embodiments, if there is a possibility that a light source is included in a visual field (i.e. angle of view) of the real photograph image, then the aforementioned light source LS(i) may be set such that the light source LS(i) can be arranged in a visual field (i.e. angle of view) of the virtual photograph image, and the light source may be expressed with a divisional surface in the three-dimensional representation. If the light source is expressed with a divisional surface, then the divisional surface has a same property as a property of the light source (i.e. characteristic data).

Furthermore, in any of the aforementioned embodiments, a property is set such as reflection factor, transmission factor and/or emitting light amount for each of partial wavelength ranges into which the specific wavelength range is divided. Alternatively, an optical characteristic (reflection factor, transmission factor, emitting light amount or the like) may be expressed by piling up plural specific distributions (e.g. Gaussian distribution) of which centers are located at plural specific wavelengths, respectively. In such a case, in the aforementioned property value set, for example, an intensity at the specific wavelength, a variance value and the like in each of the specific distributions are used as property values.

Furthermore, in Embodiment 4, as the additional sensor 51, a sound sensor such as microphone may be installed, and one or more sound sources SS(i) may be added in the three-dimensional representation. In such a case, a virtual sensor unit 61 is set corresponding to the sound sensor, and observes a virtual sound signal as the virtual sensor measurement. Further, in such a case, the sound sensor obtains a real sound signal of a predetermined time length, and error data is generated between the real sound signal of the predetermined time length and the virtual sound signal of the predetermined time length, and the error data is also used as the input data of the three-dimensional representation correction amount calculating unit 12.

Furthermore, in any of the aforementioned embodiments, the property value of the divisional surface DS(i, j) may be limited on the basis of the classification data obtained by the classifier 15. For example, if a divisional surface DS(i, j) is classified into a non light transparent object specified by the classification data, the transmission factor Tr(i) of this divisional surface DS(i, j) may not be corrected and may be fixed as zero.

Furthermore, in any of the aforementioned embodiments, a size and/or a shape of the light source LS(i) may be added in the property value set L(i) of the light source LS(i) and may be correctable with the correction amount dR.

Furthermore, in any of the aforementioned embodiments, if a predetermined image process is performed for the real photograph images, then the same image process is performed for the virtual photograph images.

Furthermore, in any of the aforementioned embodiments, when the DNN is used, a preprocess such as normalization may be performed for the input data of the DNN, if required.

Furthermore, in any of the aforementioned embodiments, the three-dimensional representation R (in particular, the divisional surfaces) can be used for another purpose than the input data of the classifier 15, and for example, using the divisional surfaces, an object in the real photograph images may be displayed three-dimensionally.

Furthermore, in any of the aforementioned embodiments, the cameras 1L and 1R may be onboard cameras installed on a mobile vehicle (automobile, railway train or the like), and the aforementioned classification data may be used for automatic driving of the mobile vehicle.

**Claims**

1.  A three-dimensional representation generating system, comprising:

    an error calculating unit;
    a three-dimensional representation correction amount calculating unit;
    a three-dimensional representation calculating unit configured to generate a three-dimensional representation corresponding to real photograph images obtained from a photographing subject by predetermined plural cameras; and
    a three-dimensional representation virtual observation unit;
    wherein the error calculating unit generates error images between the real photograph images and virtual photograph images obtained by the three-dimensional representation virtual observation unit;
    the three-dimensional representation correction amount calculating unit generates a correction amount of the three-dimensional representation, the correction amount corresponding to the error images;
    the three-dimensional representation calculating unit corrects the three-dimensional representation in accordance with the correction amount generated by the three-dimensional representation correction amount calculating unit;
    the three-dimensional representation virtual observation unit comprises a rendering unit configured to perform a rendering process for the three-dimensional representation and thereby generate the virtual photograph images, the virtual photograph images obtained by photographing the three-dimensional representation using virtual cameras corresponding to the cameras;
    the three-dimensional representation includes plural divisional surfaces arranged in a three-dimensional space; and
    the correction amount of the three-dimensional representation includes correction amounts of positions and directions of the plural divisional surfaces;,
    **characterized in that**
    the error calculating unit, the three-dimensional representation correction amount calculating unit, the three-dimensional representation calculating unit, and the three-dimensional representation virtual observation unit perform the generation of the error image, the generation of the correction amount of the three-dimensional representation, the correction of the three-dimensional representation, and the generation of the virtual photograph images from the three-dimensional representation respectively for real photograph images of each frame in a series of real photograph images in a video; and
    an initial state of the three-dimensional representation of a current frame is a three-dimensional representation estimated from the three-dimensional representations of plural past frames before the current frame; and
    the error calculating unit generates sensor error data between a real sensor measurement value obtained by a predetermined additional sensor and a virtual sensor measurement value obtained by the three-dimensional representation virtual observation unit;
    the additional sensor observes an environment including the photographing subject;
    the three-dimensional representation correction amount calculating unit generates a correction amount of the three-dimensional representation, the correction amount corresponding to the error images and the sensor error data; and
    the three-dimensional representation virtual observation unit comprises a virtual sensor unit configured to generate the virtual sensor measurement value using a virtual additional sensor corresponding to the additional sensor such that the virtual additional sensor observes the three-dimensional representation and thereby generates the virtual sensor measurement value.

2.  The three-dimensional representation generating system according to claim 1, wherein the additional sensor includes a RADAR sensor or a LiDAR sensor.

**Patentansprüche**

1.  System zum Generieren der dreidimensionalen Darstellung, das aufweist:

    eine Fehlerberechnungseinheit;
    eine Einheit zum Berechnen der Korrekturmenge der dreidimensionalen Darstellung;
    eine Einheit zum Berechnen der dreidimensionalen Darstellung, die so konfiguriert ist, dass sie eine dreidimensionale Darstellung, die realen Fotografiebildern entspricht, die von einem Fotomotiv durch vorgegebene mehrere Kameras erhalten werden, generiert; und

eine Einheit zum virtuellen Beobachten der dreidimensionalen Darstellung;

wobei die Fehlerberechnungseinheit Fehlerbilder zwischen den realen Fotografiebildern und virtuellen Fotografiebildern, die durch die Einheit zum virtuellen Beobachten der dreidimensionalen Darstellung erhalten werden, generiert;

die Einheit zum Berechnen der Korrekturmenge der dreidimensionalen Darstellung eine Korrekturmenge der dreidimensionalen Darstellung generiert, wobei die Korrekturmenge den Fehlerbildern entspricht;

die Einheit zum Berechnen der dreidimensionalen Darstellung die dreidimensionale Darstellung gemäß der Korrekturmenge, die durch die Einheit zum Berechnen der Korrekturmenge der dreidimensionalen Darstellung generiert wird, korrigiert;

die Einheit zum virtuellen Beobachten der dreidimensionalen Darstellung eine Renderingeinheit aufweist, die so konfiguriert ist, dass sie eine Renderingverarbeitung für die dreidimensionale Darstellung durchführt und dadurch die virtuellen Fotografiebilder generiert, wobei die virtuellen Fotografiebilder durch Fotografieren der dreidimensionalen Darstellung unter Verwendung von virtuellen Kameras, die den Kameras entsprechen, erhalten werden;

die dreidimensionale Darstellung mehrere Teilungsflächen, die in einem dreidimensionalen Raum angeordnet sind, aufweist; und

die Korrekturmenge der dreidimensionalen Darstellung Korrekturmengen von Positionen und Richtungen der mehreren Teilungsflächen aufweist,

**dadurch gekennzeichnet, dass**

die Fehlerberechnungseinheit, die Einheit zum Berechnen der Korrekturmenge der dreidimensionalen Darstellung, die Einheit zum Berechnen der dreidimensionalen Darstellung und die Einheit zum virtuellen Beobachten der dreidimensionalen Darstellung die Generierung des Fehlerbilds, die Generierung der Korrekturmenge der dreidimensionalen Darstellung, die Korrektur der dreidimensionalen Darstellung und die Generierung der virtuellen Fotografiebilder von der dreidimensionale Darstellung jeweils für reale Fotografiebilder eines jeden Frames in einer Serie von realen Fotografiebildern in einem Video durchführen; und

ein Initialzustand der dreidimensionalen Darstellung eines gegenwärtigen Frames eine dreidimensionale Darstellung ist, die von den dreidimensionalen Darstellungen von mehreren vergangenen Frames vor dem gegenwärtigen Frame geschätzt wird;

und

die Fehlerberechnungseinheit Sensorfehlerdaten zwischen einem realen Sensormesswert, der durch einen vorgegebenen zusätzlichen Sensor erhalten wird, und einem virtuellen Sensormesswert, der durch die Einheit zum virtuellen Beobachten der dreidimensionalen Darstellung erhalten wird, generiert;

der zusätzliche Sensor eine Umgebung, die das Fotomotiv aufweist, beobachtet;

die Einheit zum Berechnen der Korrekturmenge der dreidimensionalen Darstellung eine Korrekturmenge der dreidimensionalen Darstellung generiert, wobei die Korrekturmenge den Fehlerbildern und den Sensorfehlerdaten entspricht; und

die Einheit zum virtuellen Beobachten der dreidimensionalen Darstellung eine virtuelle Sensoreinheit aufweist, die so konfiguriert ist, dass sie den virtuellen Sensormesswert unter Verwendung eines virtuellen zusätzlichen Sensors, der dem zusätzlichen Sensor entspricht, generiert, so dass der virtuelle zusätzliche Sensor die dreidimensionale Darstellung beobachtet und dadurch den virtuellen Sensormesswert generiert.

2. System zum Generieren der dreidimensionalen Darstellung gemäß Anspruch 1, wobei der zusätzliche Sensor einen RADAR-Sensor oder einen LiDAR-Sensor umfasst.

**Revendications**

1. Système de génération de représentations tridimensionnelles, comprenant :

une unité de calcul d'erreur ;

une unité de calcul de quantité de correction de représentation tridimensionnelle ;

une unité de calcul de représentation tridimensionnelle conçue pour générer une représentation tridimensionnelle correspondant à des images photographiques réelles obtenues à partir d'un sujet de photographie par une pluralité d'appareils photographiques prédéterminés ; et

une unité d'observation virtuelle de représentation tridimensionnelle ;

dans lequel l'unité de calcul d'erreur génère des images d'erreur entre les images photographiques réelles et des images photographiques virtuelles obtenues par l'unité d'observation virtuelle de représentations tridimensionnelles ;

l'unité de calcul de quantité de correction de représentation tridimensionnelle génère une quantité de correction de la représentation tridimensionnelle, la quantité de correction correspondant aux images d'erreur ;

l'unité de calcul de représentation tridimensionnelle corrige la représentation tridimensionnelle selon la quantité de correction générée par l'unité de calcul de quantité de correction de représentation tridimensionnelle ;

l'unité d'observation virtuelle de représentation tridimensionnelle comprend une unité de rendu conçue pour assurer un processus de rendu pour la représentation tridimensionnelle et générer ainsi les images photographiques virtuelles, les images photographiques virtuelles étant obtenues en photographiant la représentation tridimensionnelle au moyen d'appareils photographiques virtuels correspondant aux appareils photographiques ;

la représentation tridimensionnelle inclut une pluralité de surfaces divisionnaires agencées dans un espace tridimensionnel ; et

la quantité de correction de la représentation tridimensionnelle inclut des quantités de correction de positions et de directions de la pluralité de surfaces divisionnaires ;

**caractérisé en ce que**

l'unité de calcul d'erreur, l'unité de calcul de quantité de correction de représentation tridimensionnelle, l'unité de calcul de représentation tridimensionnelle et l'unité d'observation virtuelle de représentation tridimensionnelle assurent la génération de l'image d'erreur, la génération de la quantité de correction de la représentation tridimensionnelle, la correction de la représentation tridimensionnelle et la génération d'images photographiques virtuelles à partir de la représentation tridimensionnelle respectivement pour des images photographiques réelles de chaque trame dans une série d'images photographiques réelles dans une vidéo ; et

un état initial de la représentation tridimensionnelle d'une trame actuelle est une représentation tridimensionnelle estimée à partir des représentations tridimensionnelles d'une pluralité de trames précédentes avant la trame actuelle :

et

l'unité de calcul d'erreur génère des données d'erreur de capteur entre une valeur de mesure de capteur réel obtenue par un capteur supplémentaire prédéterminé et une valeur de mesure de capteur virtuel obtenue par l'unité d'observation virtuelle de représentation tridimensionnelle ;

le capteur supplémentaire observe un environnement incluant le sujet de photographie ;

l'unité de calcul de quantité de correction de représentation tridimensionnelle génère une quantité de correction de la représentation tridimensionnelle, la quantité de correction correspondant aux images d'erreur et aux données d'erreur de capteur ; et

l'unité d'observation virtuelle de représentation tridimensionnelle comprend une unité de capteur virtuel conçue pour générer la valeur de mesure de capteur virtuel au moyen d'un capteur supplémentaire virtuel correspondant au capteur supplémentaire de sorte que le capteur supplémentaire virtuel observe la représentation tridimensionnelle et génère ainsi la valeur de mesure de capteur virtuel.

2. Système de génération de représentations tridimensionnelles selon la revendication 1,
dans lequel le capteur supplémentaire inclut un capteur RADAR ou un capteur LiDAR.

EP 3 621 041 B1

**FIG. 1**

FIG. 2

DIVISIONAL SURFACE
DS(i, j)

FIG. 3

DIVISIONAL SURFACE
DS(i, j)

# FIG. 4

# FIG. 5

```
                    ┌─────────────┐
                    │    START    │
                    └──────┬──────┘
                           │
          ┌────────────────┤
          │                ▼               S1
          │      ┌──────────────────────┐
          │      │      ACQUIRING        │
          │      │ REAL PHOTOGRAPH IMAGES│
          │      └──────────┬───────────┘
          │                 ▼              S2
          │      ┌──────────────────────┐
          │      │   INITIAL SETTING OF  │
          │      │ A THREE-DIMENTIONAL   │
          │      │    REPRESENTATION     │
          │      └──────────┬───────────┘
          │   ┌─────────────┤
          │   │             ▼              S3
          │   │   ┌──────────────────────┐
          │   │   │    CALCULATION OF     │
          │   │   │     ERROR IMAGES      │
          │   │   └──────────┬───────────┘
          │   │              ▼              S4
          │   │   ╱─────────────────────╲    YES
          │   │  ⟨  IS CORRECTION FINISHED OF ⟩────┐
          │   │   ╲THE THREE-DIMENTIONAL  ╱         │
          │   │    ╲  REPRESENTATION ?  ╱           │
          │   │          │ NO                       │
          │   │          ▼              S5          │
          │   │   ┌──────────────────────┐          │
          │   │   │ CALCULATING A CORRECTION│        │
          │   │   │ AMOUNT OF THE THREE-   │        │
          │   │   │ DIMENTIONAL REPRESENTATION│     │
          │   │   └──────────┬───────────┘          │
          │   │              ▼              S6       │
          │   │   ┌──────────────────────┐          │
          │   │   │     CORRECTING        │          │
          │   │   │ THE THREE-DIMENTIONAL │          │
          │   │   │   REPRESENTATION      │          │
          │   │   └──────────┬───────────┘          │
          │   │              ▼              S7       │
          │   │   ┌──────────────────────┐          │
          │   │   │     RENDERING         │          │
          │   │   │(GENERATING VIRTUAL    │          │
          │   │   │ PHOTOGRAPH IMAGES)    │          │
          │   │   └──────────┬───────────┘          │
          │   └──────────────┘                      │
          │                                    ▼     S8
          │                        ┌──────────────────────┐
          │                        │    CLASSIFICATION     │
          │                        └──────────┬───────────┘
          │                                   ▼         S9
          │                     NO ╱─────────────────────╲
          └───────────────────────⟨  END OF THE OPERATION ?⟩
                                    ╲─────────────────────╱
                                           │ YES
                                           ▼
                                    ┌─────────────┐
                                    │    E N D    │
                                    └─────────────┘
```

# FIG. 6

R SPACE

R11

dR11

R12

dR12
dR13    R1    dR1q

R13    ...    R1q

R2

R3

...    Rp

REFERENCE
THREE-DIMENSIONAL REPRESENTATION $R_i$    ⊖    RENDERING UNIT 21    REFERENCE
PHOTOGRAPH IMAGE    ⊖

SAMPLED
THREE-DIMENSIONAL REPRESENTATION $R_{ij}$    RENDERING UNIT 21    SAMPLED
PHOTOGRAPH IMAGE

TRAINING DATA    THREE-DIMENSIONAL REPRESENTATION
CORRECTION AMOUNT $dR_{ij}$    ERROR IMAGE

EP 3 621 041 B1

FIG. 7

EP 3 621 041 B1

FIG. 8

**EP 3 621 041 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016218999 A
- JP 2012248221 A
- US 2018047208 A1